# EUROPÄISCHE PATENTSCHRIFT

(11) **EP 3 792 316 B1**
(45) Veröffentlichungstag und Bekanntmachung des Hinweises auf die Patenterteilung: **23.03.2022**
(21) Anmeldenummer: 20195213.2
(22) Anmeldetag: 09.09.2020
(51) Int. Cl.: C09D 5/00

(54) **CYCLOALIPHATISCHE DIOLE UND/ODER DIKETONE ENTHALTENDE MATTIERUNGSKOMPONENTE ZUR REVERSIBLEN OBERFLÄCHENBESCHICHTUNG UND ZUSAMMENSETZUNGEN ENTHALTEND DIE MATTIERUNGSKOMPONENTE**
MATTING COMPONENT CONTAINING CYCLOALIPHATIC DIOLS AND / OR DIKETONES FOR REVERSIBLE SURFACE COATING AND COMPOSITIONS CONTAINING THE MATTING COMPONENT
COMPOSANTS DE MATAGE CONTENANT DES DIOLES CYCLOALIPHATIQUES ET/OU DIKETONE DESTINÉS AU REVÊTEMENT DE SURFACE RÉVERSIBLE ET COMPOSANTS CONTENANT LES COMPOSANTS DE MATAGE

(30) Priorität: 10.09.2019 DE 202019104992 U
(43) Veröffentlichungstag der Anmeldung: 17.03.2021
(73) Patentinhaber: MR Chemie GmbH, 59427 Unna (DE)
(72) Erfinder: SOWIETZKI, Damian, 59427 Unna (DE); RENZING, Carsten, 59427 Unna (DE)
(74) Vertreter: Michalski Hüttermann & Partner Patentanwälte mbB

(56) Entgegenhaltungen:
- EP-A2- 0 825 165
- WO-A1-2010/142571
- US-A- 3 916 000

## Beschreibung

Die Erfindung betrifft eine Zusammensetzung enthaltend cycloaliphatische Diole und/oder cycloaliphatische Diketone geeignet zur reversiblen Beschichtung von Oberflächen und Zusammensetzungen enthaltend die Mattierungskomponente.

Mittel zur reversiblen Beschichtung von Oberflächen sind an sich bekannt. Sie finden beispielsweise für Messungen an Oberflächen mit infrarot- und/oder elektromagnetischer Strahlung oder mittels monochromatischem Lichts Anwendung. Beispielsweise werden Oberflächen vor radiometrischen oder photometrischen Messungen von Oberflächenprofilen temporär mit einer Beschichtung versehen, die die Reflexionseigenschaften der Oberfläche verbessert. Dabei wird zumeist eine möglichst vollständige, diffuse Reflexion angestrebt. Die Beschichtung soll sich möglichst leicht gleichmäßig auftragen lassen und nach der Messung möglichst einfach rückstandsfrei entfernt werden können.

In der DE 10 2017 005 172 A1 wird ein Mittel zur reversiblen Oberflächenmodifizierung an optisch inkompatiblen Objekten zur temporären Mattierung, Versiegelung und Konservierung für optische Messungen vorgeschlagen, wobei auf der Oberfläche des zu untersuchenden Objektes mindestens eine dünne optisch wirksame Schicht mit weitgehend gleichmäßig spektralem Reflexions- und Streuvermögen aufgetragen wird und wobei sich das hierfür verwendete Mittel aufgrund seiner Flüchtigkeit in relativ kurzer Zeit nach dem Auftragen wieder selbsttätig und rückstandsfrei entfernt, wobei das Mittel als eine wesentliche Komponente den Kohlenwasserstoff Adamantan oder von Adamantan hergestellte Derivate aufweist.

Der Nachteil der in der DE 10 2017 005 172 A1 beschriebenen Mittel ist, dass diese keine sprühfähige Spray- beziehungsweise Aerosoldosen Befüllung beschreiben, in der Adamantan oder von Adamantan hergestellte Derivate oder Diamantan, in hohen Konzentrationen bei Raumtemperatur in einer Zusammensetzung umfassend bei Raumtemperatur gasförmige Kohlenwasserstoffe, die nachfolgend auch als Treibmittel bezeichnet werden, gelöst sind, welche sich unter Bildung einer homogenen, gleichmäßigen reversiblen Beschichtung auf Oberflächen in Form eines Aerosols aufsprühen lässt.

Adamantan oder Diamantan, lassen sich zudem in nur geringen Anteilen von < 3 Gew.-% in Aceton oder Alkoholen, wie Ethanol, oder < 9 Gew -% in gesättigte Kohlenwasserstoffe, wie n-Pentan oder n-Hexan lösen. Durch die geringe Löslichkeit beginnen Adamantan oder Diamantan schnell zu sublimieren. Beispielsweise ist eine maximale Sublimationszeit von ca. 60 min auf einer Edelstahloberfläche V2A (1.4305 (X8CrNiS18-9) bei Raumtemperatur für bekannte Mittel zu reversiblem Oberflächenmodifizierung zu beobachten. Somit ist zwar eine reversible Beschichtung gegeben, die Auftragung und Messung größerer Oberflächen, beispielsweise größer oder gleich 10 m² wird allerdings erschwert, da das Mittel zumeist mehrfach aufgetragen werden muss. Somit steigt der Verbrauch des Mittels und es ergibt sich eine mühsame Handhabung.

Bekannte Mittel zur reversiblen Oberflächenmodifizierung bieten deswegen noch Verbesserungspotential. Es ist deshalb die Aufgabe der vorliegenden Erfindung ein Mittel zur reversiblen Oberflächenbeschichtung bereitzustellen das die vorbeschriebenen Nachteile zumindest teilweise Überwindet. Insbesondere ist es die Aufgabe der vorliegenden Erfindung Mittel zur reversiblen Oberflächenbeschichtung bereitzustellen, die eine verbesserte Beschichtungsdauer aufweisen.

Gelöst wird die Aufgabe durch die unabhängigen Ansprüche. Bevorzugte Ausgestaltungen der Erfindung sind in den Unteransprüchen, in der Beschreibung oder den Beispielen angegeben, wobei weitere in den Unteransprüchen, in der Beschreibung oder den Beispielen beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Zur Lösung der Aufgabe der vorliegenden Erfindung wird eine Mattierungskomponente zur Verfügung gestellt, aufweisend zumindest ein erstes Cycloalkan ausgewählt aus der Gruppe der C₈-Diole und/oder der C₈-Diketone und zumindest ein zweites Cycloalkan ausgewählt aus der Gruppe der Diamantoide und/oder der Diamantoid-Derivate.

Unter dem Begriff Mattierungskomponente ist im Sinne der vorliegenden Erfindung auch ein Mattierungsmittel zu verstehen. Die Mattierungskomponente kann also auch nicht als Komponente im Sinne eines Anteils einer Zusammensetzung vorliegen. Die Mattierungskomponente kann demnach auch einzeln als reines Mattierungsmittel vorliegen.

Es hat sich überraschend gezeigt, dass sich die erfindungsgemäße Mattierungskomponente besonders gut zur reversiblen Oberflächenbeschichtung eignet. Das Merkmal "reversibel" im Sinne der vorliegenden Beschreibung bedeutet, dass eine die Mattierungskomponente aufweisende Oberflächenbeschichtung, beispielsweise durch thermische Behandlung und/oder nach einer vorbestimmten Zeit, von der Oberfläche rückstandslos oder fast rückstandsfrei sublimiert, d.h. > 99 Gew.-%, bezogen auf das auf die Oberfläche aufgebrachte Mattierungskomponente, sublimiert. Besondere Maßnahmen zum Entfernen der Oberflächenbeschichtung sind somit nicht erforderlich.

Insbesondere konnte überraschender Weise festgestellt werden, dass die Mattierungskomponente aufweisend zumindest ein erstes Cycloalkan ausgewählt aus der Gruppe der C₈-Diole und/oder der C₈-Diketone und zumindest ein zweites Cycloalkan ausgewählt aus der Gruppe der Diamantoide und/oder der Diamantoid-Derivate, im Vergleich zu Mattierungskomponenten die ausschließlich oder als wesentlichen Bestandteil Diamantoide und/oder der Diamantoid-Derivate als Mattierungskomponente aufweisen eine verbesserte Löslichkeit aufweisen. Somit konnte überraschender Weise gezeigt werden, dass die Mattierungskomponente in einer Zusammensetzung mit besonders hohem Anteil an Mattierungskomponente bereitgestellt werden kann.

Es hat sich ferner vorteilhafter Weise gezeigt, dass das zumindest eine erste Cycloalkan einerseits selbst eine gute Mattierungswirkung hervorruft und andererseits auch eine höheren Konzentration des zumindest einen zweiten Cycloalkans in einer Zusammensetzung erlaubt. Somit kann die Mattierungskomponente für eine Oberflächenbeschichtung besonders effizient verwendet werden.

In überraschender Weise konnte zudem gezeigt werden, dass die vorbeschriebene Mattierungskomponente im Vergleich zu bekannten Mattierungskomponenten besonders lange eine Oberfläche beschichtet, bevor sie so weit sublimiert ist, dass die Oberflächenbeschichtung nicht mehr die gewünschte Wirkung hat.

Unter Cycloalkanen der Grupp der C₈-Diole sind im Sinne der vorliegenden Erfindung Alkane zu verstehen, die zumindest einen Kohlenstoffring und zwei Alkoholgruppen aufweisen. Unter Cycloalkanen der Grupp der C₈-Dione sind im Sinne der vorliegenden Erfindung Alkane zu verstehen, die zumindest einen Kohlenstoffring und zwei Ketogruppen aufweisen.

Bevorzugt kann vorgesehen sein, dass die Mattierungskomponente das zumindest eine erste Cycloalkan und das zumindest eine zweite Cycloalkan in einem Verhältnis vom zumindest einen ersten Cycloalkan zum zumindest einen zweiten Cycloalkan in einem Bereich von ≥ 1:1 bis ≤ 2:1 aufweist, bevorzugt von ≥ 1,2:1 bis ≤ 1,8:1 aufweist.

Dadurch kann erreicht werden, dass sich die Löslichkeit des zumindest einen zweiten Cycloalkans ausreichend erhöht und es kann erreicht werden, dass die Mattierungskomponente besonders lange auf einer Oberfläche verbleibt, bevor sie zu stark sublimiert ist.

Bevorzugt kann vorgesehen sein, dass die Mattierungskomponente ≥ 50 Gew.-% bis ≤ 90 Gew.-% bezogen auf die Mattierungskomponente des zumindest einen ersten Cycloalkans und ≥ 10 Gew.-% bis ≤ 50 Gew.-% bezogen auf die Mattierungskomponente des zumindest einen zweiten Cycloalkans aufweist, bevorzugt ≥ 53 Gew.-% bis ≤ 75 Gew.-% des zumindest einen ersten Cycloalkans und ≥ 25 Gew.-% bis ≤ 47 Gew.-% des zumindest einen zweiten Cycloalkans, besonders bevorzugt ≥ 56 Gew.-% bis ≤ 64 Gew.-% des zumindest einen ersten Cycloalkans und ≥ 36 Gew.-% bis ≤ 44 Gew.-% des zumindest einen zweiten Cycloalkans.

Durch die vorbeschriebenen Anteile des zumindest einen ersten Cycloalkans und des zumindest einen zweiten Cycloalkans an der Mattierungskomponente können besonders vorteilhafte Mattierungseigenschaften erreicht werden.

Bevorzugt kann vorgesehen sein, dass das zumindest eine erste Cycloalkan eine Reinheit von ≥ 95 Gew.-% bezogen auf das erste Cycloalkan aufweist, besonders bevorzugt von ≥ 98 Gew.-%, insbesondere von ≥ 99 Gew.-%. Bevorzugt kann vorgesehen sein, dass alternativ oder zusätzlich das zumindest eine zweite Cycloalkan eine Reinheit von ≥ 95 Gew.-% bezogen auf das erste Cycloalkan aufweist, besonders bevorzugt von ≥ 98 Gew.-%, insbesondere von ≥ 99 Gew.-%.

Durch die vorbeschriebene Reinheit kann erreicht werden, dass die Mattierungskomponente besonders rückstandsfrei sublimiert. Somit können auch Oberflächen mattiert werden, die nach dem Entfernen der Oberflächenmodifizierung nur besonders geringe Rückstände aufweisen sollen. Beispielsweise kann eine derartige Mattierungskomponente von vormals glänzenden Oberflächen derart rückstandsfrei sublimieren, dass die Oberfläche nach dem Sublimieren wieder glänzend ist, ohne dass ein anschließendes Polieren notwendig ist.

Besonders bevorzugt kann vorgesehen sein, dass die Mattierungskomponente aus dem zumindest einen ersten Cycloalkan und dem zumindest einen zweiten Cycloalkan besteht.

Bevorzugt kann vorgesehen sein, dass das zumindest eine erste Cycloalkan ausgewählt ist aus der Gruppe bestehend aus Cyclooctandion, Methyl-cycloheptandion, Dimethyl-cyclohexandion, Dimethyl-cyclohexandion, Trimethyl-cyclopentandion, Tetramethyl-cyclobutandion, Cyclooctandiol, Methyl-cycloheptandiol, Dimethyl-cyclohexandiol, Dimethyl-cyclohexandiol, Trimethyl-cyclopentandiol, Tetramethyl-cyclobutandiol und Mischungen davon.

Bevorzugt kann vorgesehen sein, dass das zumindest eine erste Cycloalkan ausgewählt ist aus der Gruppe bestehend aus 1,5-Cyclooctandion, 5,5-Dimethyl-cyclohexan-1,3-dion (Dimedon), 4,4-Dimethyl-cyclohexan-1,3-dion, 2,4,4-Trimethylcyclopentan-1,2-dion, 2,2,4,4-Tetramethyl-cyclobutan-1,3-dion, 1,5-Cyclooctandiol, 5,5-Dimethyl-cyclohexan-1,3-diol, 4,4-Dimethyl-cyclohexan-1,3-diol, 2,4,4-Tiimethylcyclopentan-1,2-diol, 2,2,4,4-Tetramethyl-cyclobutan-1,3-diol und Mischungen davon.

Besonders bevorzugt kann vorgesehen sein, dass das zumindest eine erste Cycloalkan ausgewählt ist aus der Gruppe bestehend aus 5,5-Dimethyl-cyclohexan-1,3-dion (Dimedon), 2,2,4,4-Tetramethyl-cyclobutan-1,3-diol und Mischungen davon. Bevorzugt kann demnach vorgesehen sein, dass das zumindest eine erste Cycloalkan 5,5-Dimethyl-cyclohexan-1,3-dion ist. Alternativ kann bevorzugt vorgesehen sein, dass das zumindest eine erste Cycloalkan 2,2,4,4-Tetramethyl-cyclobutan-1,3-diol ist. Weiter alternativ kann bevorzugt vorgesehen sein, dass das zumindest eine erste Cycloalkan eine Mischung aus 5,5-Dimethyl-cyclohexan-1,3-dion und 2,2,4,4-Tetramethyl-cyclobutan-1,3-diol ist.

Es hat sich überraschender Weise herausgestellt, dass die vorbeschriebenen ersten Cycloalkane sich besonders gut für die Mattierungskomponente eignen. Dabei konnte überraschender Weise gezeigt werden, dass diese Cycloalkan das Sublimieren einer Oberflächenbeschichtung besonders gut verlangsamen und zugleich die Löslichkeit der zweiten Cycloalkane besonders gut verbessern.

Bevorzugt kann vorgesehen sein, dass das zumindest eine zweite Cycloalkan ausgewählt ist aus der Gruppe bestehend aus Adamantan, Icean (C₁₂H₁₈), BC-8 (C₁₄H₂₀), Diamantan (C₁₄H₂₀), Triamantan (C₁₈H₂₄), Isotetramantan (C₂₂H₂₈), Pentamantan (C₂₆H₃₂), Super-Adamantan (C₃₀H₃₆), Diamantoid-Derivaten, vorzugsweise 1-Adamantol, und Mischungen davon, wobei das zumindest eine zweite Cycloalkan besonders bevorzugt Adamantan ist.

Dadurch kann erreicht werden, dass eine Oberflächenbeschichtung mit der Mattierungskomponente eine besonders gute Reflektivität aufweist.

Zur Lösung der Aufgabe der vorliegenden Erfindung wird ferner eine Zusammensetzung zur Verfügung gestellt, enthaltend die Komponenten:
a) ≥ 20 Gew.-% bis ≤ 80 Gew.-% bezogen auf die Zusammensetzung einer vorbeschriebenen Mattierungskomponente; und
b) ≥ 20 Gew.-% bis ≤ 80 Gew.-% bezogen auf die Zusammensetzung einer Lösungsmittelkomponente, die bei 23° C flüssig ist, und ausgewählt ist aus der Gruppe umfassend Aceton, C₁ bis C₄ Alkohol und/oder C₅ bis C₈ Kohlenwasserstoff und Mischungen davon;
wobei die Komponenten so ausgewählt werden, dass das Gesamtgewicht aller Komponenten 100 Gew.-% nicht übersteigt.

Das Merkmal Raumtemperatur, wenn nicht anders angegeben bezieht sich auf eine Temperatur von 23° C

Es hat sich überraschend gezeigt, dass sich die erfindungsgemäße Zusammensetzung besonders gut zur reversiblen Oberflächenbeschichtung eignet.

Insbesondere konnte überraschender Weise festgestellt werden, dass die Mattierungskomponente aufweisend zumindest ein erstes Cycloalkan ausgewählt aus der Gruppe der C₈-Diole und/oder der C₈-Diketone und zumindest ein zweites Cycloalkan ausgewählt aus der Gruppe der Diamantoide und/oder der Diamantoid-Derivate, im Vergleich zu Mattierungskomponenten die ausschließlich oder als wesentlichen Bestandteil Diamantoide und/oder der Diamantoid-Derivate als Mattierungskomponente aufweisen eine verbesserte Löslichkeit aufweisen. Somit konnte überraschender Weise eine Zusammensetzung mit besonders hohem Anteil an Mattierungskomponente bereitgestellt werden.

Es hat sich ferner vorteilhafter Weise gezeigt, dass das zumindest eine erste Cycloalkan einerseits selbst eine gute Mattierungswirkung hervorruft und andererseits auch eine höheren Konzentration des zumindest einen zweiten Cycloalkans erlaubt. Somit kann eine Oberflächenbeschichtung mit der Zusammensetzung besonders effizient sein.

In überraschender Weise konnte zudem gezeigt werden, dass die vorbeschriebene Zusammensetzung im Vergleich zu bekannten Zusammensetzungen besonders lange eine Oberfläche beschichtet, bevor so weit sublimiert ist, dass die Oberflächenbeschichtung nicht mehr die gewünschte Wirkung hat.

Die Zusammensetzung kann optional ein Treibmittel aufweisen, wobei das Treibmittel wenigstens einen Kohlenwasserstoff ausgewählt aus der Gruppe der C₁ bis C₄ Kohlenwasserstoffe umfasst, der bei 23° C gasförmig ist.

Der C₅ bis C₈ Kohlenwasserstoff der Lösungsmittelkomponente kann bevorzugt ausgewählt sein aus der Gruppe bestehend aus C₅ Kohlenwasserstoff, insbesondere n-Pentan, iso-Pentan, neo-Pentan und Cyclopentan; C₆ Kohlenwasserstoff, insbesondere n-Hexan, 2-Methylpentan, 3-Methylpentan, 2,2-Dimethylbutan, 2,3-Dimethylbutan, Cyclohexan und Methylcyclopentan; C₇ Kohlenwasserstoff, insbesondere n-Heptan, 2-Methylhexan, 3-Methylhexan, 2,2-Dimethylpentan, 2,3-Dimethylpentan, 2,4-Dimethylpentan, 3,3-Dimethylpentan, 3-Ethylpentan, 2,2,3-Trimethylbutan, Cycloheptan, Methylcyclohexan, Dimethylcyclopentan; C₈ Kohlenwasserstoff, insbesondere n-Octan, 2-Methylheptan, 3-Methylheptan, 4-Methylheptan, 2,2-Dimethylhexan, 2,3-Dimethylhexan, 2,4-Dimethylhexan, 2,5-Dimethylhexan, 3,3-Dimethylhexan, 3,4-Dimethylhexan, 3-Ethylhexan, 2,2,3-Trimethylpentan, 2,2,4-Trimethylpentan (iso-Octan), 2,3,3-Trimethylpentan, 2,3,4-Trimethylpentan, 3-Ethyl-2-methylpentan, 3-Ethyl-3-methylpentan, 2,2,3,3-Tetramethylbutan, Cyclooctan, Methyl cycloheptan, Ethylcyclohexan, Dimethylcyclohexan, Ethylmethylcyclopentan und Trimethylcyclopentan; und Mischungen davon.

Bevorzugt kann vorgesehen sein, dass Cyclohexan von dem C₅ bis C₈ Kohlenwasserstoff der Lösungsmittelkomponente ausgenommen ist.

Weiter bevorzugt kann vorgesehen sein, dass die Lösungsmittelkomponente ausgewählt ist aus der Gruppe umfassend Aceton, Pentan, Ethanol, Isopropanol und Mischungen davon.

Es konnte überraschender Weise gezeigt werden, dass sich die vorgenannten Lösungsmittel besonders gut zum Lösen der Mattierungskomponente eignen. Dabei konnte überraschender Weise festgestellt werden, dass das zumindest eine erste Cycloalkan besonders bei diesen Lösungsmitteln die Löslichkeit des zumindest einen zweiten Cycloalkans verbessert.

Bevorzugt kann vorgesehen sein, dass die Losungsmittelkomponente Aceton bezogen auf die Zusammensetzung aufweist in einem Bereich von ≥ 5 Gew.-% bis ≤ 80 Gew.-%, vorzugsweise ≥ 20 Gew.-% bis ≤ 70 Gew.-% Aceton, weiter bevorzugt ≥ 40 Gew.-% bis ≤ 65 Gew.-%, insbesondere bevorzugt ≥ 55 Gew.-% bis ≤ 60 Gew.-%.

Dadurch kann erreicht werden, dass die Zusammensetzung bei einem Auftragen auf eine Oberfläche die Oberfläche besonders gut benetzt.

Bevorzugt kann vorgesehen sein, dass die Losungsmittelkomponente Propanol bezogen auf die Zusammensetzung aufweist in einem Bereich von ≥ 5 Gew.-% bis ≤ 80 Gew.-%, vorzugsweise ≥ 10 Gew.-% bis ≤ 40 Gew.-%, weiter bevorzugt ≥ 15 Gew.-% bis ≤ 25 Gew.-%, insbesondere bevorzugt ≥ 18 Gew.-% bis ≤ 22 Gew.-%, wobei das Propanol vorzugsweise n-Propanol und/oder Isopropanol und bevorzugt Isopropanol ist.

Weiter bevorzugt kann vorgesehen sein, dass die Lösungsmittelkomponente Aceton und Isopropanol aufweist, wobei die Lösungsmittelkomponente vorzugsweise Aceton bezogen auf die Zusammensetzung aufweist in einem Bereich von ≥ 40 Gew.-% bis ≤ 65 Gew.-%, insbesondere bevorzugt ≥ 55 Gew.-% bis ≤ 60 Gew.-%, und Isopropanol bezogen auf die Zusammensetzung in einem Bereich von ≥ 15 Gew.-% bis ≤ 25 Gew.-%, insbesondere bevorzugt ≥ 18 Gew.-% bis ≤ 22 Gew.-%.

Es konnte überraschender Weise gezeigt werden, dass eine vorbeschriebene Mischung aus Isopropanol und Aceton ein besonders homogenes Auftragend er Zusammensetzung erlaubt. Ferne konnte gezeigt werden, dass sich diese Lösemittelzusammensetzung besonders für 2,2,4,4-Tetramethyl-cyclobutan-1,3-diol als das zumindest eine erste Cycloalkan eignet.

Bevorzugt kann vorgesehen sein, dass die Losungsmittelkomponente Ethanol bezogen auf die Zusammensetzung aufweist in einem Bereich von ≥ 5 Gew.-% bis ≤ 80 Gew.-%, vorzugsweise ≥ 25 Gew.-% bis ≤ 75 Gew.-%, weiter bevorzugt ≥ 45 Gew.-% bis ≤ 65 Gew.-%, insbesondere bevorzugt ≥ 55 Gew.-% bis ≤ 60 Gew.-%.

Es konnte überraschender Weise gezeigt werden, dass sich diese Lösemittelzusammensetzung ebenfalls besonders für 2,2,4,4-Tetramethyl-cyclobutan-1,3-diol als das zumindest eine erste Cycloalkan eignet.

Bevorzugt kann vorgesehen sein, dass die Losungsmittelkomponente Pentan bezogen auf die Zusammensetzung aufweist in einem Bereich von ≥ 5 Gew.-% bis ≤ 80 Gew.-%, vorzugsweise ≥ 10 Gew.-% bis ≤ 60 Gew.-%, weiter bevorzugt ≥ 20 Gew.-% bis ≤ 45 Gew.-%, insbesondere bevorzugt ≥ 25 Gew.-% bis ≤ 35 Gew.-%, wobei das Pentan vorzugsweise ein n-Pentan und/oder iso-Pentan und bevorzugt n-Pentan ist.

Es konnte überraschender Weise gezeigt werden, dass sich Pentan besonders für 5,5-Dimethyl-cyclohexan-1,3-dion als das zumindest eine erste Cycloalkan eignet.

Der erfindungsgemäßen Zusammensetzung können zusätzlich Additive zugesetzt werden, wie Pigmente, Farbstoffe oder andere farbig erscheinende Substanzen, die leicht oxidieren, durch chemische Reaktion zerstört werden und/oder aufgrund der Einwirkung von Licht und Wärme sublimieren.

Mit der Erfindung wird ferner eine sprühfähige Zusammensetzung vorgeschlagen, wobei die sprühfähige Zusammensetzung die vorbeschriebene Zusammensetzung aufweist in einem Bereich von ≥ 15 Gew.-% bis ≤ 65 Gew.-% bezogen auf die sprühfähige Zusammensetzung, vorzugsweise von ≥ 25 Gew.-% bis ≤ 55 Gew.-%, und ein Treibmittel aufweist in einem Bereich von ≥ 35 Gew.-% bis ≤ 85 Gew.-% bezogen auf die sprühfähige Zusammensetzung, vorzugsweise von ≥ 45 Gew.-% bis ≤ 75 Gew.-%, wobei das Treibmittel wenigstens einen Kohlenwasserstoff ausgewählt aus der Gruppe der C₁ bis C₄ Kohlenwasserstoffe umfasst, der bei 23° C gasförmig ist.

Es wurde vorteilhaft festgestellt, dass sich mittels der erfindungsgemäßen sprühfähigen Zusammensetzung eine hohe Konzentration von Mattierungskomponente als Aerosol auf eine Oberfläche versprühen lässt.

Unter "sprühfähige Zusammensetzung" ist im Sinne der vorliegenden Erfindung zu verstehen, dass die Zusammensetzung als Aerosol verteilbar ist.

Die durch Versprühen der erfindungsgemäßen Zusammensetzung erhältliche Beschichtung weist ein sehr gutes spektrales Reflexions- und Streuvermögen auf. Somit lässt sich die mittels der erfindungsgemäßen Zusammensetzung erhältlich Beschichtung sehr gut für optische Oberflächenmessungen, beispielsweise für das optische 3D-Scannen sowie für Untersuchungen der Oberflächengüte bzw. Oberflächendefekte, verwenden.

Bevorzugt kann vorgesehen sein, dass das Treibmittel umfasst, bezogen auf das Treibmittel:
≥ 30 Gew.-% bis ≤ 60 Gew.-%, bevorzugt ≥ 40 Gew.-% bis ≤ 50 Gew.-%, besonders bevorzugt ≥ 42 Gew.-% bis ≤ 47 Gew.-% Propan, wobei Propan ein n-Propan, ein Isopropan oder ein Gemisch aus n-Propan und Isopropan ist, vorzugsweise ist Propan ein Isopropan;
≥ 40 Gew.-% bis ≤ 70 Gew.-%, bevorzugt ≥ 50 Gew.-% bis ≤ 60 Gew.-%, und besonders bevorzugt ≥ 52 Gew.-% bis ≤ 57 Gew.-% Butan, wobei Butan ein n-Butan, ein iso-Butan, ein tert-Butan oder ein Gemisch aus mindestens n-Butan, iso-Butan und/oder tert-Butan, und vorzugsweise ein Gemisch aus n-Butan und iso-Butan ist.

Es konnte gezeigt werden, dass das vorbeschriebene Treibmittel besonders gut für das Versprühen der vorbeschriebenen Zusammensetzung geeignet ist.

Bevorzugt kann vorgesehen sein, dass Treibmittel umfasst, bezogen auf das Treibmittel:
≥ 30 Gew.-% bis ≤ 60 Gew.-%, bevorzugt ≥ 40 Gew.-% bis ≤ 50 Gew.-% und besonders bevorzugt ≥ 42 Gew.-% bis ≤ 47 Gew.-% Propan, wobei Propan ein n-Propan, ein Isopropan oder ein Gemisch aus n-Propan und Isopropan ist, vorzugsweise ist Propan ein Isopropan;
≥ 40 Gew.-% bis ≤ 70 Gew.-%, bevorzugt ≥ 50 Gew.-% bis ≤ 60 Gew.-%, und besonders bevorzugt ≥ 52 Gew.-% bis ≤ 57 Gew.-% n-Butan;
≥ 0,1 Gew.-% bis 5 Gew.-%, bevorzugt ≥ 0,5 Gew.-% bis ≤ 2,5 Gew.-%, und besonders bevorzugt ≥ 0,75 Gew.-% bis ≤ 1,25 Gew.-% Isobutan.

Auch diese Treibmittel kann besonders vorteilhaft für das Versprühen der vorbeschriebenen Zusammensetzung geeignet sein.

Bevorzugt kann vorgesehen sein, dass die sprühfähige Zusammensetzung unter einem Druck von ≥ 100 kPa bis ≤ 1000 kPa, vorzugsweise von ≥ 200 kPa bis ≤ 800 kPa, weiter bevorzugt von ≥ 300 kPa bis ≤ 600 kPa, und besonders bevorzugt von ≥ 400 kPa bis ≤ 500 kPa, steht.

Dadurch kann erreicht werden, dass die sprühfähige Zusammensetzung sich an einer Düse durch Expansion besonders fein verteilt.

Bevorzugt kann vorgesehen sein, dass die sprühfähige Zusammensetzung eine homogene und/oder klare flüssige Lösung ist, und vorzugsweise ist die Zusammensetzung eine homogene und/oder klare flüssige Lösung bei 23° C.

Dadurch kann erreicht werden, dass die Zusammensetzung ohne vorherige Erwärmung verwendet werden kann.

Mit der Erfindung wird ferner eine sprühfähige Zusammensetzung vorgeschlagen, wobei die sprühfähige Zusammensetzung die vorbeschriebene Mattierungskomponente aufweist in einem Bereich von ≥ 5 Gew.-% bis ≤ 25 Gew.-% bezogen auf die sprühfähige Zusammensetzung, vorzugsweise von ≥ 7 Gew.-% bis ≤ 15 Gew.-%, und ein Treibmittel aufweist in einem Bereich von ≥ 75 Gew.-% bis ≤ 95 Gew.-% bezogen auf die sprühfähige Zusammensetzung, vorzugsweise von ≥ 85 Gew.-% bis ≤ 93 Gew.-%, wobei das Treibmittel wenigstens einen Kohlenwasserstoff ausgewählt aus der Gruppe der C₁ bis C₄ Kohlenwasserstoffe umfasst, der bei 23° C gasförmig ist.

Es konnte überraschenderweise gezeigt werden, dass durch die verwendung der vorbeschriebenen Mattierungskomponente eine sprühfähige Zusammensetzung auch ohne verwendung eines weiteren Lösungsmittels erreicht werden kann. Es konnte vorteilhafterweise erreicht werden, dass die Zusammensetzung einen höheren Anteil an Mattierungskomponente im vergleich zu Zusammensetzungen mit bekannten Mattierungskomponenten aufweisen kann.

Bevorzugt kann vorgesehen sein, dass das Treibmittel umfasst, bezogen auf das Treibmittel:
≥ 30 Gew.-% bis ≤ 60 Gew.-%, bevorzugt ≥ 40 Gew.-% bis ≤ 50 Gew.-%, besonders bevorzugt ≥ 42 Gew.-% bis ≤ 47 Gew.-% Propan, wobei Propan ein n-Propan, ein Isopropan oder ein Gemisch aus n-Propan und Isopropan ist, vorzugsweise ist Propan ein Isopropan;
≥ 40 Gew.-% bis ≤ 70 Gew.-%, bevorzugt ≥ 50 Gew.-% bis ≤ 60 Gew.-%, und besonders bevorzugt ≥ 52 Gew.-% bis ≤ 57 Gew.-% Butan, wobei Butan ein n-Butan, ein iso-Butan, ein tert-Butan oder ein Gemisch aus mindestens n-Butan, iso-Butan und/oder tert-Butan, und vorzugsweise ein Gemisch aus n-Butan und iso-Butan ist.

Es konnte gezeigt werden, dass das vorbeschriebene Treibmittel besonders gut für das Versprühen der vorbeschriebenen Zusammensetzung ohne Lösungsmittel geeignet ist.

Bevorzugt kann vorgesehen sein, dass Treibmittel umfasst, bezogen auf das Treibmittel:
≥ 30 Gew.-% bis ≤ 60 Gew.-%, bevorzugt ≥ 40 Gew.-% bis ≤ 50 Gew.-% und besonders bevorzugt ≥ 42 Gew.-% bis ≤ 47 Gew.-% Propan, wobei Propan ein n-Propan, ein Isopropan oder ein Gemisch aus n-Propan und Isopropan ist, vorzugsweise ist Propan ein Isopropan;
≥ 40 Gew.-% bis ≤ 70 Gew.-%, bevorzugt ≥ 50 Gew.-% bis ≤ 60 Gew.-%, und besonders bevorzugt ≥ 52 Gew.-% bis ≤ 57 Gew.-% n-Butan;
≥ 0,1 Gew.-% bis 5 Gew.-%, bevorzugt ≥ 0,5 Gew.-% bis ≤ 2,5 Gew.-%, und besonders bevorzugt ≥ 0,75 Gew.-% bis ≤ 1,25 Gew.-% Isobutan.

Auch diese Treibmittel kann besonders vorteilhaft für das Versprühen der vorbeschriebenen Zusammensetzung ohne Lösungsmittel geeignet sein.

Bevorzugt kann vorgesehen sein, dass die sprühfähige Zusammensetzung unter einem Druck von ≥ 100 kPa bis ≤ 1000 kPa, vorzugsweise von ≥ 200 kPa bis ≤ 800 kPa, weiter bevorzugt von ≥ 300 kPa bis ≤ 600 kPa, und besonders bevorzugt von ≥ 400 kPa bis ≤ 500 kPa, steht.

Dadurch kann erreicht werden, dass die sprühfähige Zusammensetzung sich an einer Düse durch Expansion besonders fein verteilt.

Bevorzugt kann vorgesehen sein, dass die sprühfähige Zusammensetzung eine homogene und/oder klare flüssige Lösung ist, und vorzugsweise ist die Zusammensetzung eine homogene und/oder klare flüssige Lösung bei 23° C.

Dadurch kann erreicht werden, dass die Zusammensetzung ohne vorherige Erwärmung verwendet werden kann.

Mit der Erfindung wird ferner eine Vorrichtung vorgeschlagen, enthaltend eine vorbeschriebene Zusammensetzung.

Bevorzugt kann vorgesehen sein, dass die Vorrichtung eine druckbeaufschlagte vorbeschriebene Zusammensetzung aufweist, wobei die Vorrichtung vorzugsweise eine Sprühvorrichtung und besonders bevorzugt eine Sprühdose ist.

Die Vorrichtung kann bevorzugt die Zusammensetzung als sprühfähige Zusammensetzung enthalten.

Damit kann die Zusammensetzung besonders vorteilhaft auf eine Oberfläche aufgetragen werden.

Bevorzugt wird die Zusammensetzung durch Vermischen der Komponenten in beliebiger Reihenfolge hergestellt. In einer Ausgestaltung kann vorgesehen sein, dass in einem ersten Schritt die Mattierungskomponente hergestellt wird durch Vermischen von dem zumindest einen ersten Cycloalkan und dem zumindest einen zweiten Cycloalkan. Es kann vorgesehen sein, dass die Mattierungskomponente in einem zweiten Schritt in der Lösungsmittelkomponente gelöst wird. In einer alternativen Ausgestaltung kann vorgesehen sein, dass das zumindest eine erste Cycloalkan und das zumindest eine zweite Cycloalkan direkt in der Lösemittelkomponente gelöste werden. Bevorzugt wird die sprühfähige Zusammensetzung durch Vermischen der Zusammensetzung mit dem Treibmittel hergestellt.

Mit der Erfindung wird ferner ein selbständig entfernbarer Oberflächenfilm vorgeschlagen, wobei der Selbständig entfernbare Oberflächenfilm durch Aufbringung einer vorbeschriebenen Zusammensetzung auf eine Oberfläche gebildet ist, wobei der Oberflächenfilm vorzugsweise eine Schichtdicke von 0.5 µm bis 30 µm, bevorzugt von 1 µm bis 25 µm, weiter bevorzugt von 2 µm bis 20 µm, und besonders bevorzugt von 3 µm bis 30 µm, aufweist.

Dadurch kann erreicht werden, dass der Oberflächenfilm rückstandsfrei entfernt werden kann, gut Reflexionseigenschaften aufweist und nicht zu schnell wieder von der Oberfläche sublimiert.

Bevorzugt kann vorgesehen sein, dass der Oberflächenfilm durch Aufsprühen einer vorgeschriebenen sprühfähigen Zusammensetzung auf der Oberfläche gebildet ist.

Dadurch kann der Oberflächenfilm besonders gleichmäßig aufgetragen sein.

Bevorzugt kann vorgesehen sein, dass der Oberflächenfilm mattiert, vorzugsweise weißmattiert, ist. Dadurch eignet sich der Oberflächenfilm für einen besonders breiten Anwendungsbereich.

Bevorzugt kann vorgesehen sein, dass der Oberflächenfilm bei 23°C nach einer Sublimationszeit von ≥ 60 min eine Schichtdicke in einem Bereich von ≥ 50 % bis ≤ 100 % einer ursprünglich aufgebrachten Schichtdicke aufweist.

Dadurch kann erreicht werden, dass der Oberflächenfilm auch für die Untersuchung von großen Flächen geeignet ist. Derartige Untersuchungen oder Messungen brauchen üblicherweise besonders lange, da eine besonders große Fläche untersucht werden muss. Somit kann eine besonders lange Sublimationszeit vorteilhaft sein. Dabei kann vorgesehen sein, dass die der Oberflächenfilm bei 23°C nach einer Sublimationszeit von ≥ 24 h eine Schichtdicke in einem Bereich von ≥ 50 % bis ≤ 100 % der ursprünglich aufgebrachten Schichtdicke aufweist. Bevorzugt kann vorgesehen sein, dass der Oberflächenfilm die Schichtdicke in einem Bereich von ≥ 50 % bis ≤ 100 % der ursprünglich aufgebrachten Schichtdicke bis zu einer Sublimationszeit von ≤ 7 Tagen aufweist.

Mit der Erfindung wird ferner eine Verwendung der Zusammensetzung vorgeschlagen zur Ausbildung einer dünnen, sublimierbaren Beschichtung auf Oberflächen, für optische Messungen an diesen Oberflächen.

Bevorzugt kann vorgesehen sein, dass die Zusammensetzung zur tomografischen Vermessung von Formkörpern verwendet wird.

Alternativ kann bevorzugt vorgesehen sein, dass die Zusammensetzung zur zerstörungsfreien Werkstoffprüfung (NDT) an Oberflächen verwendet wird.

Nachfolgend wird die Erfindung anhand bevorzugter Ausführungsbeispiele näher erläutert. Erfindungsgemäße Zusammensetzungen sind in den Beispielen 1 bis 4 angegeben. Erfindungsgemäße sprühfähige Zusammensetzungen sind in den Beispielen 5 bis 8 angegeben.

### Beispiel 1

Es wurden 11,0 Teile Isopropanol, 33,5 Teile Aceton, 5,5 Teile Adamantan und 7,0 Teile Tetramethyl-1,3-cyclobutandiol bezogen auf das Gewicht zusammengegeben. Es ergab sich eine Zusammensetzung aufweisend:

| | | |
|---|---|---|
| Tetramethyl-1,3-cyclobutandiol (erstes Cycloalkan) | 12,3 Gew.-% | 21,9 Gew.-% Matti erungskom ponente |
| Adamantan (zweites Cycloalkan) | 9,6 Gew.-% | |
| Isopropanol (Lösungsmi ttel) | 19,3 Gew.-% | 78,1 Gew.-% Lösungsmi ttelkom ponente |
| Aceton (Lösungsmi ttel) | 58,8 Gew.-% | |

### Beispiel 2

Es wurden 24,2 Teile Ethanol, 8,1 Teile Adamantan, 10,0 Teile Tetramethyl-1,3-cyclobutandiol und 2,0 Teile Dimethyl-cyclohexan-1,3-dion (Dimedon) bezogen auf das Gewicht zusammengegeben. Es ergab sich eine Zusammensetzung aufweisend:

| | | |
|---|---|---|
| Tetramethyl-1,3-cyclobutandiol (erstes Cycloalkan) | 22,6 Gew.-% | 45,4 Gew.-% Matti erungskom ponente |
| Dimethyl-cyclohexan-1,3-dion (erstes Cycloalkan) | 4,5 Gew.-% | |
| Adamantan (zweites Cycloalkan) | 18,3 Gew.-% | |
| Ethanol (Lösungsmi ttel) | 54,6 Gew.-% | 54,6 Gew.-% Lösungsmi ttelkom ponente |

### Beispiel 3

Es wurden 10,5 Teile n-Pentan, 10,2 Teile Adamantan und 13,0 Teile Dimethylcyclohexan-1,3-dion (Dimedon) bezogen auf das Gewicht zusammengegeben. Es ergab sich eine Zusammensetzung aufweisend:

| | | |
|---|---|---|
| Dimethyl-cyclohexan-1,3-dion (erstes Cycloalkan) | 38,6 Gew.-% | 68,9 Gew.-% Matti erungskom ponente |
| Adamantan (zweites Cycloalkan) | 30,3 Gew.-% | |
| n-Pentan (Lösungsmi ttel) | 31,1 Gew.-% | 31,1 Gew.-% Lösungsmittelkomponente |

### Beispiel 4

Es wurden 10,5 Teile n-Pentan, 10,2 Teile Adamantan, 13,0 Teile Tetramethyl-1,3-cyclobutandiol und 5,0 Teile Dimethyl-cyclohexan-1,3-dion (Dimedon) bezogen auf das Gewicht zusammengegeben. Es ergab sich eine Zusammensetzung aufweisend:

| | | |
|---|---|---|
| Tetramethyl-1,3-cyclobutandiol (erstes Cycloalkan) | 33,6 Gew.-% | 72,9 Gew.-% Matti erungskom ponente |
| Dimethyl-cyclohexan-1,3-dion (erstes Cycloalkan) | 12,9 Gew.-% | |
| Adamantan (zweites Cycloalkan) | 26,4 Gew.-% | |
| n-Pentan (Lösungsmi ttel) | 27,1 Gew.-% | 27,1 Gew.-% Lösungsmi ttelkom ponente |

### Beispiel 5

Es wurden 53,3 Gew.-% der Zusammensetzung aus Beispiel 1 mit 46,7 Gew.-% eines erfindungsgemäßen Treibmittels bestehend aus ≥ 42 Gew.-% bis ≤ 47 Gew.-% Isopropan, ≥ 52 Gew.-% bis ≤ 57 Gew.-% n-Butan und ≥ 0,75 Gew.-% bis ≤ 1,25 Gew.-% Isobutan in eine Sprühdose gegeben.

### Beispiel 6

Es wurden 39,6 Gew.-% der Zusammensetzung aus Beispiel 2 mit 60,4 Gew.-% eines erfindungsgemäßen Treibmittels bestehend aus ≥ 42 Gew.-% bis ≤ 47 Gew.-% Isopropan, ≥ 52 Gew.-% bis ≤ 57 Gew.-% n-Butan und ≥ 0,75 Gew.-% bis ≤ 1,25 Gew.-% Isobutan in eine Sprühdose gegeben.

### Beispiel 7

Es wurden 29,8 Gew.-% der Zusammensetzung aus Beispiel 3 mit 70,2 Gew.-% eines erfindungsgemäßen Treibmittels bestehend aus ≥ 42 Gew.-% bis ≤ 47 Gew.-% Isopropan, ≥ 52 Gew.-% bis ≤ 57 Gew.-% n-Butan und ≥ 0,75 Gew.-% bis ≤ 1,25 Gew.-% Isobutan in eine Sprühdose gegeben.

### Beispiel 8

Es wurden 32,8 Gew.-% der Zusammensetzung aus Beispiel 4 mit 67,2 Gew.-% eines erfindungsgemäßen Treibmittels bestehend aus ≥ 42 Gew.-% bis ≤ 47 Gew.-% Isopropan, ≥ 52 Gew.-% bis ≤ 57 Gew.-% n-Butan und ≥ 0,75 Gew.-% bis ≤ 1,25 Gew.-% Isobutan in eine Sprühdose gegeben.

### Beispiel 9

Es wurden 4,0 Teile Adamantan, 6,0 Teile Tetramethyl-1,3-cyclobutandiol, mit 90 Gew.-% eines erfindungsgemäßen Treibmittels, bezogen auf das Gewicht der sprühfähigen Zusammensetzung, in eine Sprühdose gegeben, wobei das Treibmittel aus 43 Gew.-% Isopropan, 56 Gew.-% n-Butan und ≤ 1 Gew.-% Isobutan bestand. Es ergab sich eine sprühfähige Zusammensetzung aufweisend:

| | | |
|---|---|---|
| Tetramethyl-1,3-cyclobutandiol (erstes Cycloalkan) | 4,0 Gew.-% | 10,0 Gew.-% Matti erungskom ponente |
| Adamantan (zweites Cycloalkan) | 6,0 Gew.-% | |
| Isopropan | 38,7 Gew.-% | 90,0 Gew.-% Treibmittel |
| n-Butan | 50,4 Gew.-% | |
| Isobutan | 0,9 Gew.-% | |

## Patentansprüche

1. Mattierungskomponente aufweisend zumindest ein erstes Cycloalkan ausgewählt aus der Gruppe der C₈-Diole und/oder der C₈-Diketone und zumindest ein zweites Cycloalkan ausgewählt aus der Gruppe der Diamantoide und/oder der Diamantoid-Derivate.

2. Mattierungskomponente nach Anspruch 1, wobei die Mattierungskomponente das zumindest eine erste Cycloalkan und das zumindest eine zweite Cycloalkan in einem Verhältnis vom zumindest einen ersten Cycloalkan zum zumindest einen zweiten Cycloalkan in einem Bereich von ≥ 1:1 bis ≤ 2:1 aufweist, bevorzugt von ≥ 1,2:1 bis ≤ 1,8:1 aufweist.

3. Mattierungskomponente nach einem der Ansprüche 1 oder 2, wobei die Mattierungskomponente ≥ 50 Gew.-% bis ≤ 90 Gew.-% bezogen auf die Mattierungskomponente des zumindest einen ersten Cycloalkans und ≥ 10 Gew.-% bis ≤ 50 Gew.-% bezogen auf die Mattierungskomponente des zumindest einen zweiten Cycloalkans aufweist, bevorzugt ≥ 53 Gew.-% bis ≤ 75 Gew.-% des zumindest einen ersten Cycloalkans und ≥ 25 Gew.-% bis ≤ 47 Gew.-% des zumindest einen zweiten Cycloalkans, besonders bevorzugt ≥ 56 Gew.-% bis ≤ 64 Gew.-% des zumindest einen ersten Cycloalkans und ≥ 36 Gew.-% bis ≤ 44 Gew.-% des zumindest einen zweiten Cycloalkans.

4. Mattierungskomponente nach einem der Ansprüche 1 bis 3, wobei das zumindest eine erste Cycloalkan ausgewählt ist aus der Gruppe bestehend aus Cyclooctandion, Methyl-cycloheptandion, Dimethyl-cyclohexandion, Dimethyl-cyclohexandion, Trimethyl-cyclopentandion, Tetramethyl-cyclobutandion, Cyclooctandiol, Methyl-cycloheptandiol, Dimethyl-cyclohexandiol, Dimethyl-cyclohexandiol, Trimethyl-cyclopentandiol, Tetramethyl-cyclobutandiol und Mischungen davon.

5. Mattierungskomponente nach einem der Ansprüche 1 bis 4, wobei das zumindest eine erste Cycloalkan ausgewählt ist aus der Gruppe bestehend aus 5,5-Dimethyl-cyclohexan-1,3-dion (Dimedon), 2,2,4,4-Tetramethyl-cyclobutan-1,3-diol und Mischungen davon.

6. Mattierungskomponente nach einem der Ansprüche 1 bis 5, wobei das zumindest eine zweite Cycloalkan ausgewählt ist aus der Gruppe bestehend aus Adamantan, Icean (C₁₂H₁₈), BC-8 (C₁₄H₂₀), Diamantan (C₁₄H₂₀), Triamantan (C₁₈H₂₄), Isotetramantan (C₂₂H₂₈), Pentamantan (C₂₆H₃₂), Super-Adamantan (C₃₀H₃₆), Diamantoid-Derivaten, vorzugsweise 1-Adamantol, und Mischungen davon, wobei das zumindest eine zweite Cycloalkan besonders bevorzugt Adamantan ist.

7. Zusammensetzung, enthaltend die Komponenten:
a) ≥ 20 Gew.-% bis ≤ 80 Gew.-% bezogen auf die Zusammensetzung einer Mattierungskomponente nach einem der Ansprüche 1 bis 6; und
b) ≥ 20 Gew.-% bis ≤ 80 Gew.-% bezogen auf die Zusammensetzung einer Lösungsmittelkomponente, die bei 23° C flüssig ist, und ausgewählt ist aus der Gruppe umfassend Aceton, C₁ bis C₄ Alkohol und/oder C₅ bis C₈ Kohlenwasserstoff und Mischungen davon;
wobei die Komponenten so ausgewählt werden, dass das Gesamtgewicht aller Komponenten 100 Gew.-% nicht übersteigt.

8. Zusammensetzung nach Anspruch 7, wobei die Losungsmittelkomponente Aceton bezogen auf die Zusammensetzung aufweist in einem Bereich von ≥ 5 Gew.-% bis ≤ 80 Gew.-%, vorzugsweise ≥ 20 Gew.-% bis ≤ 70 Gew.-% Aceton, weiter bevorzugt ≥ 40 Gew.-% bis ≤ 65 Gew.-%, insbesondere bevorzugt ≥ 55 Gew.-% bis ≤ 60 Gew.-%.

9. Zusammensetzung nach einem der Ansprüche 7 oder 8, wobei die Losungsmittelkomponente Propanol bezogen auf die Zusammensetzung aufweist in einem Bereich von ≥ 5 Gew.-% bis ≤ 80 Gew.-%, vorzugsweise ≥ 10 Gew.-% bis ≤ 40 Gew.-%, weiter bevorzugt ≥ 15 Gew.-% bis ≤ 25 Gew.-%, insbesondere bevorzugt ≥ 18 Gew.-% bis ≤ 22 Gew.-%, wobei das Propanol vorzugsweise n-Propanol und/oder Isopropanol und bevorzugt Isopropanol ist.

10. Zusammensetzung nach einem der Ansprüche 7 bis 9, wobei die Losungsmittelkomponente Ethanol bezogen auf die Zusammensetzung aufweist in einem Bereich von ≥ 5 Gew.-% bis ≤ 80 Gew.-%, vorzugsweise ≥ 25 Gew.-% bis ≤ 75 Gew.-%, weiter bevorzugt ≥ 45 Gew.-% bis ≤ 65 Gew.-%, insbesondere bevorzugt ≥ 55 Gew.-% bis ≤ 60 Gew.-%.

11. Zusammensetzung nach einem der Ansprüche 7 bis 10, wobei die Losungsmittelkomponente Pentan bezogen auf die Zusammensetzung aufweist in einem Bereich von ≥ 5 Gew.-% bis ≤ 80 Gew.-%, vorzugsweise ≥ 10 Gew.-% bis ≤ 60 Gew.-%, weiter bevorzugt ≥ 20 Gew.-% bis ≤ 45 Gew.-%, insbesondere bevorzugt ≥ 25 Gew.-% bis ≤ 35 Gew.-%, wobei das Pentan vorzugsweise ein n-Pentan und/oder iso-Pentan und bevorzugt n-Pentan ist.

12. Sprühfähige Zusammensetzung, wobei die sprühfähige Zusammensetzung die Zusammensetzung nach einem der Ansprüche 7 bis 11 aufweist in einem Bereich von ≥ 15 Gew.-% bis ≤ 65 Gew.-% bezogen auf die sprühfähige Zusammensetzung, vorzugsweise von ≥ 25 Gew.-% bis ≤ 55 Gew.-%, und ein Treibmittel aufweist in einem Bereich von ≥ 35 Gew.-% bis ≤ 85 Gew.-% bezogen auf die sprühfähige Zusammensetzung, vorzugsweise von ≥ 45 Gew.-% bis ≤ 75 Gew.-%, wobei das Treibmittel wenigstens einen Kohlenwasserstoff ausgewählt aus der Gruppe der C₁ bis C₄ Kohlenwasserstoffe umfasst, der bei 23° C gasförmig ist.

13. Sprühfähige Zusammensetzung nach Anspruch 12, wobei das Treibmittel umfasst, bezogen auf das Treibmittel:
- ≥ 30 Gew.-% bis ≤ 60 Gew.-%, bevorzugt ≥ 40 Gew.-% bis ≤ 50 Gew.-%, besonders bevorzugt ≥ 42 Gew.-% bis ≤ 47 Gew.-% Propan, wobei Propan ein n-Propan, ein Isopropan oder ein Gemisch aus n-Propan und Isopropan ist, vorzugsweise ist Propan ein Isopropan;
- ≥ 40 Gew.-% bis ≤ 70 Gew.-%, bevorzugt ≥ 50 Gew.-% bis ≤ 60 Gew.-%, und besonders bevorzugt ≥ 52 Gew.-% bis ≤ 57 Gew.-% Butan, wobei Butan ein n-Butan, ein iso-Butan, ein tert-Butan oder ein Gemisch aus mindestens n-Butan, iso-Butan und/oder tert-Butan, und vorzugsweise ein Gemisch aus n-Butan und iso-Butan ist.

14. Sprühfähige Zusammensetzung nach einem der Ansprüche 12 oder 13, wobei die sprühfähige Zusammensetzung unter einem Druck von ≥ 100 kPa bis ≤ 1000 kPa, vorzugsweise von ≥ 200 kPa bis ≤ 800 kPa, weiter bevorzugt von ≥ 300 kPa bis ≤ 600 kPa, und besonders bevorzugt von ≥ 400 kPa bis ≤ 500 kPa, steht.

15. Vorrichtung enthaltend eine Zusammensetzung nach einem der Ansprüche 7 bis 14.

16. Vorrichtung nach Anspruch 15, wobei die Vorrichtung eine druckbeaufschlagte Zusammensetzung nach einem der Ansprüche 7 bis 14 aufweist, wobei die Vorrichtung vorzugsweise eine Sprühvorrichtung und besonders bevorzugt eine Sprühdose ist.

17. Selbständig entfernbarer Oberflächenfilm, gebildet durch Aufbringung einer Zusammensetzung nach einem der Ansprüche 7 bis 14 auf eine Oberfläche, wobei der Oberflächenfilm vorzugsweise eine Schichtdicke von 0.5 µm bis 30 µm, bevorzugt von 1 µm bis 25 µm, weiter bevorzugt von 2 µm bis 20 µm, und besonders bevorzugt von 3 µm bis 30 µm, aufweist.

18. Verwendung der Zusammensetzung nach einem der Ansprüche 7 bis 14 zur Ausbildung einer dünnen, sublimierbaren Beschichtung auf Oberflächen, für optische Messungen an diesen Oberflächen.

19. Verwendung der Zusammensetzung nach einem der Ansprüche 7 bis 14, zur tomografischen Vermessung von Formkörpern.

20. Verwendung der Zusammensetzung nach einem der Ansprüche 7 bis 14, zur zerstörungsfreien Werkstoffprüfung (NDT) an Oberflächen.

## Claims

1. Matting component comprising at least one first cycloalkane selected from the group of C₈-diols and/or C₈-diketones and at least one second cycloalkane selected from the group of diamantoids and/or diamantoid derivatives.

2. Matting component according to claim 1, wherein the matting component comprises the at least one first cycloalkane and the at least one second cycloalkane in a ratio of the at least one first cycloalkane to the at least one second cycloalkane in a range from ≥ 1:1 to ≤ 2:1, preferably ≥ 1.2:1 to ≤ 1.8:1.

3. Matting component according to claim 1 or 2, wherein the matting component comprises, based on the matting component, ≥ 50 wt.-% to ≤ 90 wt.-% of the at least one first cycloalkane, and, based on the matting component, ≥ 10 wt.-% to ≤ 50 wt.-% of the at least one second cycloalkane, preferably ≥ 53 wt.-% to ≤ 75 wt.-% of the at least one first cycloalkane and ≥ 25 wt.-% to ≤ 47 wt.-% of the at least one second cycloalkane, particularly preferably ≥ 56 wt.-% to 64 wt.-% of the at least one first cycloalkane and ≥ 36 wt.-% to ≤ 44 wt.-% of the at least one second cycloalkane.

4. Matting component according to any one of claims 1 to 3, wherein the at least one first cycloalkane is selected from the group consisting of cyclooctanedione, methyl cycloheptanedione, dimethyl-cyclohexanedione, dimethyl-cyclohexanedione, trimethyl-cyclopentanedione, tetramethyl-cyclobutanedione, cyclooctanediol, methyl-cycloheptanediol, dimethyl-cyclohexanediol, dimethyl-cyclohexanediol, trimethyl-cyclopentanediol, tetramethyl-cyclobutanediol, and mixtures thereof.

5. Matting component according to any one of claims 1 to 4, wherein the at least one first cycloalkane is selected from the group consisting of 5,5-dimethyl-cyclohexane-1,3-dione (dimedone), 2,2,4,4-tetramethyl-cyclobutane-1,3-diol, and mixtures thereof.

6. Matting component according to any one of claims 1 to 5, wherein the at least one second cycloalkane is selected from the group consisting of adamantane, iceane (C₁₂H₁₈), BC-8 (C₁₄H₂₀), diamantane (C₁₄H₂₀), triamantane (C18H24), isotetramantane (C₂₂H₂₈), pentamantane (C₂₆H₃₂), super-adamantane (C₃₀H₃₆), diamantoid derivatives, preferably 1-adamantol, and mixtures thereof, wherein the at least one second cycloalkane is particularly preferably adamantane.

7. Composition comprising the components:
a) ≥ 20 wt.-% to ≤ 80 wt.-% based on the composition of a matting component according to any one of claims 1 to 6; and
b) ≥ 20 wt.-% to ≤ 80 wt.-% based on the composition of a solvent component which is liquid at 23°C and is selected from the group consisting of acetone, C₁ to C₄ alcohol and/or C₅ to C₈ hydrocarbon and mixtures thereof,
wherein the components are selected such that the total weight of all components does not exceed 100 wt.-%.

8. Composition according to claim 7, wherein the solvent component comprises, based on the composition, acetone in a range from ≥ 5 wt.-% to ≤ 80 wt.-%, preferably ≥ 20 wt.-% to ≤ 70 wt.-% of acetone, more preferably ≥ 40 wt.-% to ≤ 65 wt.-%, more preferably ≥ 55 wt.-% to ≤ 60 wt.-%.

9. Composition according to claims 7 or 8, wherein the solvent component comprises, based on the composition, propanol in a range from ≥ 5 wt.-% to ≤ 80 wt.-%, preferably ≥ 10 wt.-% to ≤ 40 wt.-%, further preferably ≥ 15 wt.-% to ≤ 25 wt.-%, more preferably ≥ 18 wt.-% to ≤ 22 wt.-%, wherein the propanol is preferably n-propanol and/or isopropanol and more preferably isopropanol.

10. Composition according to any one of claims 7 to 9, wherein the solvent component comprises, based on the composition, ethanol in a range from ≥ 5 wt.-% to ≤ 80 wt.-%, preferably ≥ 25 wt.-% to ≤ 75 wt.-%, further preferably ≥ 45 wt.-% to ≤ 65 wt.-%, more preferably ≥ 55 wt.-% to ≤ 60 wt.-%.

11. Composition according to any one of claims 7 to 10, wherein the solvent component comprises, based on the composition, pentane in a range from ≥ 5 wt.-% to ≤ 80 wt.-%, preferably ≥ 10 wt.-% to ≤ 60 wt.-%, further preferably ≥ 20 wt.-% to ≤ 45 wt.-%, more preferably ≥ 25 wt.-% to ≤ 35 wt.-%, wherein the pentane is preferably n-pentane and/or isopentane and preferably n-pentane.

12. Sprayable composition, wherein the sprayable composition comprises the composition according to any one of claims 7 to 11, based on the sprayable composition, in a range from ≥ 15 wt.-% to ≤ 65 wt.-%, preferably ≥ 25 wt.-% to ≤ 55 wt.-%, and comprises a blowing agent in a range from ≥ 35 wt.-% to ≤ 85 wt.-% based on the sprayable composition, preferably ≥ 45 wt.-% to ≤ 75 wt.-%, wherein the blowing agent comprises at least one hydrocarbon selected from the group consisting of C₁ to C₄ hydrocarbons, which is gaseous at 23°C.

13. Sprayable composition according to claim 12, wherein the blowing agent comprises based on the blowing agent:
≥ 30 wt.-% to ≤ 60 wt.-%, preferably ≥ 40 wt.-% to ≤ 50 wt.-%, particularly preferably ≥ 42 wt.-% to ≤ 47 wt.-% propane, wherein propane is an n-propane, isopropane or a mixture of n-propane and isopropane, wherein preferably propane is isopropane;
≥ 40 wt.-% to ≤ 70 wt.-%, preferably ≥ 50 wt.-% to ≤ 60 wt.-%, particularly preferably ≥ 52 wt.-% to ≤ 57 wt.-% butane, wherein butane is an n-butane, an isobutane, a tert-butane or a mixture of at least n-butane, iso-butane and/or tert-butane, and preferably a mixture of n-butane and isobutane.

14. Sprayable composition according to claims 12 or 13, wherein the sprayable composition is under a pressure from ≥ 100 kPa to ≤ 1000 kPa, preferably ≥ 200 kPa to ≤ 800 kPa, more preferably ≥ 300 kPa to ≤ 600 kPa, and most preferably ≥ 400 kPa to ≤ 500 kPa.

15. Device comprising a composition according to any one of claims 7 to 14.

16. Device according to claim 15, wherein the device comprises a pressurized composition according to any one of claims 7 to 14, wherein the device is preferably a spraying device and particularly preferably a spray can.

17. Autonomously removable surface film formed by applying a composition according to any one of claims 7 to 14 onto a surface, wherein the surface film preferably has a film thickness from 0.5 µm to 30 µm, preferably from 1 µm to 25 µm, more preferably from 2 µm to 20 µm, and particularly preferably from 3 µm to 30 µm.

18. Use of the composition according to any one of claims 7 to 14 for forming a thin sublimable coating on surfaces for optical measurements on these surfaces.

19. Use of the composition according to any one of claims 7 to 14 for tomographic measurement on shaped bodies.

20. Use of the composition according to any one of claims 7 to 14 for non-destructive testing (NDT) on surfaces.

## Revendications

1. Composant de matage comprenant au moins un premier cycloalcane choisi parmi le groupe des diols en C₈ et/ou des dicétones en C₈, et au moins un deuxième cycloalcane choisi parmi le groupe des diamantoïdes et/ou dérivés de diamantoïdes.

2. Composant de matage selon la revendication 1, dans lequel le composant de matage comprend l'au moins un premier cycloalcane et l'au moins un deuxième cycloalcane dans un rapport d'au moins un premier cycloalcane et d'au moins un deuxième cycloalcane dans une plage de ≥ 1:1 à ≤ 2 :1, de préférence de ≥ 1,2:1 à ≤ 1,8:1.

3. Composant de matage selon la revendication 1 ou la revendication 2, dans lequel le composant de matage comprend ≥ 50% en poids à ≤ 90% en poids de l'au moins un premier cycloalcane par rapport au composant de matage et ≥ 10% en poids à ≤ 50% en poids de l'au moins un deuxième cycloalcane par rapport au composant de matage, de préférence ≥ 53% en poids à ≤ 75% en poids de l'au moins un premier cycloalcane par rapport au composant de matage, et ≥ 25% en poids à ≤ 47% en poids de l'au moins un deuxième cycloalcane par rapport au composant de matage, de manière particulièrement préférée ≥ 56% en poids à ≤ 64% en poids de l'au moins un premier cycloalcane par rapport au composant de matage, et ≥ 36% en poids à ≤ 44% en poids de l'au moins un deuxième cycloalcane par rapport au composant de matage.

4. Composant de matage selon l'une quelconques des revendications 1 à 3, dans lequel l'au moins un premier cycloalcane est choisi parmi le groupe consistant en cyclooctanedione, méthyl-cycloheptanedione, diméthyl-cyclohexanedione, triméthyl-cyclopentanedione, tétraméthyl-cyclobutanedione, cyclooctanediol, méthyl-cycloheptanediol, diméthyl-cyclohexanediol, triméthyl-cyclopentanediol, tétraméthyl-cyclobutanediol et mélanges de ceux-ci.

5. Composant de matage selon l'une quelconques des revendications 1 à 4, dans lequel l'au moins un premier cycloalcane est choisi parmi le groupe consistant en 5,5-diméthyl-cyclohexanedione (Dimédone), 2,2,4,4-tétraméthyl-cyclobutane-1,3-diol et mélanges de ceux-ci.

6. Composant de matage selon l'une quelconques des revendications 1 à 5, dans lequel l'au moins un deuxième cycloalcane est choisi parmi le groupe consistant en adamantane, icéane (C₁₂H₁₈), BC-8 (C₁₄H₂₀), diamantane (C₁₄H₂₀), triamantane (C₁₈H₂₄), isotétramantane (C₂₂H₂₈), pentamantane (C₂₆H₃₂), super-adamantane (C₃₀H₃₆), dérivés de diamantoïdes, de préférence 1-adamantanol, et mélanges de ceux-ci, l'au moins un deuxième cycloalcane étant de manière particulièrement préférée l'adamantane.

7. Composition comprenant les composants :
(a) ≥ 20% en poids à ≤ 80% en poids par rapport à la composition d'un composant de matage selon l'une quelconque des revendications 1 à 6 ; et
(b) ≥ 20% en poids à ≤ 80% en poids par rapport à la composition d'un composant solvant qui est fluide à 23°C et est choisi parmi le groupe comprenant acétone, alcool en C₁ à C₄ et/ou hydrocarbures en C₅ à C₈, et mélanges de ceux-ci ;
dans laquelle les composants sont choisis de sorte que le poids total de tous les composants ne dépasse pas 100% en poids.

8. Composition selon la revendication 7, dans laquelle le composant solvant comprend de l'acétone dans une plage de ≥ 5% en poids à ≤ 80% en poids par rapport à la composition, de préférence de ≥ 20% en poids à ≤ 70% en poids, de manière particulièrement préférée de ≥ 40% en poids à ≤ 65% en poids, de manière encore plus particulièrement préférée de ≥ 55% en poids à ≤ 60% en poids.

9. Composition selon la revendication 7 ou la revendication 8, dans laquelle le composant solvant comprend du propanol dans une plage de ≥ 5% en poids à ≤ 80% en poids par rapport à la composition, de préférence de ≥ 10% en poids à ≤ 40% en poids, de manière particulièrement préférée de ≥ 15% en poids à ≤ 25% en poids, de manière encore plus particulièrement préférée de ≥ 18% en poids à ≤ 22% en poids, le propanol étant de préférence n-propanol et/ou isopropanol et de manière particulièrement préférée isopropanol.

10. Composition selon l'une quelconque des revendications 7 à 9, dans laquelle le composant solvant comprend de l'éthanol dans une plage de ≥ 5% en poids à ≤ 80% en poids par rapport à la composition, de préférence de ≥ 25% en poids à ≤ 75% en poids, de manière particulièrement préférée de ≥ 45% en poids à ≤ 65% en poids, de manière encore plus particulièrement préférée de ≥ 55% en poids à ≤ 60% en poids.

11. Composition selon l'une quelconque des revendications 7 à 10, dans laquelle le composant solvant comprend du pentane dans une plage de ≥ 5% en poids à ≤ 80% en poids par rapport à la composition, de préférence de ≥ 10% en poids à ≤ 60% en poids, de manière particulièrement préférée de ≥ 20% en poids à ≤ 45% en poids, de manière encore plus particulièrement préférée de ≥ 25% en poids à ≤ 35% en poids, le pentane étant de préférence n-pentane et/ou isopentane et de manière particulièrement préférée n-pentane.

12. Composition pulvérisable, dans laquelle la composition pulvérisable comprend la composition selon l'une quelconque des revendications 7 à 11 dans une plage de ≥ 15% en poids à ≤ 65% en poids par rapport à la composition pulvérisable, de préférence de ≥ 25% en poids à ≤ 55% en poids, et un agent d'expansion dans une plage ≥ 35% en poids à ≤ 85% en poids par rapport à la composition pulvérisable, de préférence de ≥ 45% en poids à ≤ 75% en poids, l'agent d'expansion comprenant au moins un hydrocarbure choisi parmi le groupe des hydrocarbures en C₁ à C₄ qui est gazeux à 23°C.

13. Composition pulvérisable selon la revendication 12, dans laquelle l'agent d'expansion comprend, par rapport à l'agent d'expansion :
- ≥ 30% en poids à ≤ 60% en poids, de préférence ≥ 40% en poids à ≤ 50% en poids, de manière particulièrement préférée ≥ 42% en poids à ≤ 47% en poids, de propane, le propane étant un n-propane, un isopropane ou un mélange de n-propane et isopropane, et de préférence un isopropane ;
- ≥ 40% en poids à ≤ 70% en poids, de préférence ≥ 50% en poids à ≤ 60% en poids, de manière particulièrement préférée ≥ 52% en poids à ≤ 57% en poids, de butane, le butane étant un n-butane, un isobutane ou un mélange d'au moins n-butane et isobutane et/ou tert-butane, et de préférence un mélange de n-butane et isobutane.

14. Composition pulvérisable selon la revendication 12 ou la revendication 13, dans laquelle la composition pulvérisable est sous une pression de ≥ 100 kPa à ≤ 1000 kPa, de préférence de ≥ 200 kPa à ≤ 800 kPa, de manière particulièrement préférée de ≥ 300 kPa à ≤ 600 kPa, et de manière encore plus particulièrement préférée de ≥ 400 kPa à ≤ 500 kPa.

15. Dispositif contenant une composition selon l'une quelconque des revendications 7 à 14.

16. Dispositif selon la revendication 15, dans lequel le dispositif comprend une composition pressurisée selon l'une quelconque des revendications 7 à 14, le dispositif étant de préférence un dispositif de pulvérisation et de manière particulièrement préférée une bombe aérosol.

17. Film superficiel amovible de manière indépendante, formé par application d'une composition selon l'une quelconque des revendications 7 à 14 sur une surface, le film superficiel présentant de préférence une épaisseur de couche de 0,5 µm à 30 µm, de préférence de 1 µm à 25 µm, de manière particulièrement préférée de 2 µm à 20 µm, et de manière encore plus particulièrement préférée de 3 µm à 30 µm.

18. Utilisation de la composition selon l'une quelconque des revendications 7 à 14 pour la formation d'un revêtement mince, sublimable sur des surfaces, pour une mesure optique au niveau de ces surfaces.

19. Utilisation de la composition selon l'une quelconque des revendications 7 à 14 pour une mesure tomographique d'articles moulés.

20. Utilisation de la composition selon l'une quelconque des revendications 7 à 14 pour un contrôle non destructif de matériau (CND) au niveau de surfaces.
